# FASCICULE DE BREVET EUROPEEN

(11) **EP 2 443 012 B1**
(45) Date de publication et mention de la délivrance du brevet: **29.01.2014**
(21) Numéro de dépôt: 10734163.8
(22) Date de dépôt: 14.06.2010
(51) Int. Cl.: B61B 12/06

(54) **DISPOSITIF DE SURVEILLANCE POUR UNE INSTALLATION DE TRANSPORT A CABLE ET A UNE METHODE DE SURVEILLANCE**
ÜBERWACHUNGSVORRICHTUNG FÜR KABELTRANSPORTER UND ÜBERWACHUNGSVERFAHREN
SURVEILLANCE DEVICE FOR CABLE TRANSPORT APPARATUS AND SURVEILLANCE METHOD

(30) Priorité: 18.06.2009 FR 0902968
(43) Date de publication de la demande: 25.04.2012
(73) Titulaire: Pomagalski, 38341 Voreppe Cedex (FR)
(72) Inventeur: MARNAS, Luc, 38250 Saint Nizier du Moucherotte (FR); BOGEY POESY, Eric, 38100 Grenoble (FR)
(74) Mandataire: Novagraaf Technologies
(86) Numéro de dépôt international: PCT/FR2010/000436
(87) Numéro de publication internationale: WO 2010/146251

(56) Documents cités:
- FR-A1- 2 313 247
- FR-A1- 2 504 482

## Description

### DOMAINE TECHNIQUE DE L'INVENTION

L'invention se rapporte à un dispositif de surveillance pour une installation de transport à câble, notamment aérien et à une méthode de surveillance.

Un tel dispositif de surveillance est connu du document FR 2313247.

### ETAT DE LA TECHNIQUE ANTERIEURE

Dans les installations de transport ou de remorquage, notamment les téléphériques, télécabines, télésièges et analogues, il est absolument nécessaire de provoquer instantanément l'arrêt de l'installation en cas de déraillement du câble. Pour cela, il est connu, par exemple du document FR2548612, d'associer à l'installation de transport une ou plusieurs lignes électriques de sécurité dont l'interruption, notamment lors du déraillement du câble, provoque l'arrêt de l'installation. Dans le document FR2548612, la ligne de sécurité comporte une barrette cassante conductrice électriquement qui est disposée à proximité d'un galet de guidage du câble et qui est susceptible d'être brisée par la chute du câble. Ainsi, la chute du câble provoque l'interruption de la ligne de sécurité.

Cependant, ces installations de transport, qui sont le plus souvent localisées en haute montagne, sont souvent exposées à des conditions de fonctionnement sévères et les mauvais contacts électriques entre la barrette et le support qui en résultent sont à l'origine d'arrêts intempestifs fréquents, au détriment de la disponibilité de l'installation.

Par conséquent, il est avantageux de prévoir deux barrettes afin de vérifier que l'absence de contact électrique entre la barrette et le support est bien dû à un déraillement du câble et non pas à une défaillance du système de sécurité. Cette double vérification permet d'augmenter la disponibilité de l'installation en évitant les arrêts intempestifs.

Cependant, cette multiplication des barrettes a aussi pour conséquence de multiplier les lignes électriques de sécurité, ce qui augmente considérablement le coût de l'installation et son encombrement.

### EXPOSE DE L'INVENTION

L'invention vise à remédier aux inconvénients de l'état de la technique en proposant un dispositif de sécurité qui soit moins encombrant que les précédents tout en étant aussi fiable et en évitant autant que possible les arrêts intempestifs de l'installation.

Plus précisément, l'invention concerne un dispositif de surveillance d'une installation de transport comportant un câble soutenu par N pylônes, N étant un entier supérieur ou égal à trois, le dispositif de surveillance comportant:
- au moins 2N interrupteurs, deux interrupteurs étant disposés au niveau de chaque pylône,
- une armoire électrique de sécurité,
- N+1 lignes électriques reliant les interrupteurs à l'armoire électrique de sécurité, les interrupteurs étant câblés de la manière suivante:
   - une première ligne électrique relie un des interrupteurs du premier pylône à l'armoire électrique de sécurité;
   - une N+1-ième ligne électrique relie un des interrupteurs du N-ième pylône à l'armoire électrique de sécurité;
   - la même ligne électrique n relie en série, pour tout entier n compris entre 2 et N, un des interrupteurs du pylône n-1 et un des interrupteurs du pylône n à l'armoire électrique de sécurité.

La présente invention permet d'éviter les arrêts intempestifs de l'installation et de réaliser un câblage dans lequel le nombre de lignes électriques utilisées est restreint. En effet, selon l'invention, deux interrupteurs sont utilisés par pylône, ce qui permet de vérifier l'information en cas d'interruption de la ligne électrique.

Une même ligne électrique est utilisée pour relier un des interrupteurs d'un premier pylône et un des interrupteurs du pylône adjacent. Ce câblage permet de diviser par deux le nombre de lignes électriques utilisées, tout en conservant une très bonne fiabilité et une très bonne disponibilité du dispositif puisqu'il y a deux interrupteurs par pylône électrique, chacun étant relié à l'armoire électrique de sécurité par une ligne électrique différente, ce qui permet de vérifier l'information donnée par un interrupteur. Cette double information et ce double câblage évitent les arrêts intempestifs inutiles de l'installation.

Selon différents modes de réalisation, chaque interrupteur peut comporter :
- un levier conducteur électriquement pivotant en cas de déraillement du câble ; ou
- une barrette conductrice électriquement apte à se rompre en cas de déraillement du câble.

Selon un mode de réalisation préférentiel de l'invention, l'armoire électrique de sécurité comporte N+1 boîtiers de commande, le boîtier de commande n étant relié à la ligne électrique n.

Avantageusement, l'armoire électrique de sécurité est câblée de façon à ce que:
- lorsque au moins un interrupteur de la ligne n est ouvert, un état 0 est attribué au boîtier n;
- lorsque tous les interrupteurs de la ligne n sont fermés, un état 1 est attribué au boîtier n.

Le fait d'associer à chaque ligne électrique un boîtier de commande permet de localiser les défauts, sans utiliser trop de lignes électriques. En effet, lorsqu'une ligne électrique n est interrompue, l'état 0 est attribué au boîtier correspondant. Inversement, lorsque le boîtier n est dans l'état 0, on peut en déduire que la ligne n a été interrompue, c'est-à-dire qu'un interrupteur du pylône n-1 ou du pylône n a été ouvert. La vérification de défaut est donc facile pour un agent de maintenance qui a juste deux pylônes à inspecter.

Avantageusement, l'armoire électrique de sécurité selon l'invention comporte en outre des moyens d'alerte susceptibles d'être actionnés lorsque au moins un des boîtiers est dans l'état 0.

De cette manière, lorsque au moins un des boîtiers est dans l'état 0, les moyens d'alerte sont actionnés, et les agents de maintenance de l'installation peuvent intervenir sur l'installation pour vérifier la cause de l'alerte. Les moyens d'alerte peuvent être agencés de manière à émettre un signal sonore ou visuel.

Selon un mode de réalisation préférentiel de l'invention, l'armoire électrique de sécurité comporte en outre des moyens d'arrêt agencés pour arrêter l'installation seulement si deux boîtiers sont dans l'état 0 simultanément, ce qui limite les risques d'arrêt intempestif de l'installation puisque la probabilité pour que deux interrupteurs interrompent simultanément deux lignes électriques différentes à cause d'un mauvais fonctionnement de ces interrupteurs est faible. Dans la plupart des cas, lorsque deux boîtiers sont dans l'état 0 simultanément, c'est dû à un déraillement de câble.

Avantageusement, les moyens d'arrêt de l'installation n'arrêtent l'installation que si deux boîtiers passent à l'état 0 dans un laps de temps inférieur à 2 s, ce qui permet encore de limiter les arrêts intempestifs de l'installation puisque, lorsque deux interrupteurs passent dans l'état 0 en moins de 2 s, c'est dans la plupart des cas les interrupteurs d'un même pylône qui ont été ouverts à cause d'un déraillement de câble.

Selon un mode de réalisation préféré de l'invention, on peut en outre envisager que l'armoire électrique de sécurité soit câblée de manière à ce que:
- les boîtiers de commande soient répartis dans deux groupes de façon à ce que les deux interrupteurs d'un même pylône n soient reliés à deux boîtiers de commande qui sont chacun dans un groupe différent,
- lorsque au moins un des boîtiers est dans l'état 0, l'état 0 est attribué au groupe dans lequel il se trouve,
- les moyens d'arrêt sont actionnés si et seulement si les deux groupes passent à l'état 0 simultanément.

De cette façon, on réduit encore les risques d'arrêt intempestif de l'installation puisque les chances pour qu'un interrupteur d'un groupe s'ouvre en même temps qu'un interrupteur de l'autre groupe, alors que ces deux interrupteurs ne sont pas sur le même pylône, sont très faibles. Et par conséquent, dans la plupart des cas, lorsqu'un interrupteur d'un groupe et un interrupteur de l'autre groupe s'enclenchent simultanément, l'arrêt de l'installation est justifié car il y a bien eu un déraillement du câble.

Selon un autre mode de réalisation préférée de l'invention, l'armoire électrique de sécurité est agencée pour que les moyens d'arrêt soient activés si et seulement si deux boîtiers consécutifs, n et n+1, sont dans l'état 0 simultanément.

Ce mode de réalisation permet également de réduire les risques d'arrêt intempestif de l'installation, puisque lorsque les deux boîtiers consécutifs n et n+1 sont dans l'état 0 simultanément, cela peut être dû à trois cas de figures :
- soit les deux interrupteurs du pylône n se sont enclenchés, auquel cas il y a de fortes chances pour que ce soit dû à un déraillement de câble ; c'est le cas le plus probable ;
- soit un interrupteur du pylône n-1 et un interrupteur des pylônes n ou n+1 se sont enclenchés;
- soit un interrupteur du pylône n+1 et un interrupteur des pylônes n ou n-1 se sont enclenchés.

Les deux derniers cas ont des probabilités d'apparition très faibles et par conséquent, dans la plupart des cas, lorsque deux boîtiers consécutifs passent à 0 simultanément, cela est dû à un déraillement de câble.

Selon un deuxième aspect, l'invention concerne également une méthode de surveillance d'une installation de transport comportant N organes et N+1 moyens de détection, N étant un entier supérieur ou égal à trois, les N organes et N+1 moyens de détection étant agencés de façon à ce que:
- le premier moyen de détection surveille le premier organe,
- le N+1-ième moyen de détection surveille le N-ième organe,
- le moyen de détection n, pour n compris entre 2 et N, surveille les 2 organes n-1 et n,
la méthode de surveillance comprenant les étapes suivantes:
- chaque moyen de détection est placé dans un état 1 tant que tous les organes qu'il surveille fonctionnent correctement,
- le moyen de détection passe dans un état 0 lorsque au moins un des organes qu'il surveille est défectueux,
- un signal de défaut de l'installation est émis lorsqu'une condition de défaut est remplie, la condition de défaut n'étant remplie que si au moins deux des moyens de détection sont dans un état 0 simultanément.

Cette méthode de surveillance permet donc d'avoir une double surveillance de chacun des N organes, tout en utilisant seulement N+1 moyens de détection, au lieu de 2N. Cette méthode de surveillance offre donc une très bonne fiabilité et une très bonne disponibilité, tout en n'utilisant qu'un faible nombre de moyens de détection. Le fait de n'émettre un signal de défaut que dans le cas où au moins deux moyens de détection sont dans l'état 0 simultanément permet d'éviter les envois intempestifs de signaux de défaut.

Selon un mode préféré de réalisation de l'invention, les organes sont des pylônes supportant un câble aérien et les moyens de détection sont constitués de deux interrupteurs, un boîtier de commande et d'une ligne électrique reliant les deux interrupteurs au boîtier de commande, la ligne électrique pouvant être interrompue par les interrupteurs en cas de déraillement du câble, le boîtier pouvant être placé dans un état 1 lorsque la ligne électrique est continue et dans un état 0 lorsque la ligne électrique est interrompue. Dans ce cas particulier, l'émission d'un signal de défaut entraîne l'arrêt de l'installation.

Avantageusement, un signal d'alerte est émis lorsque au moins un des moyens de détection passe dans l'état 0, ce qui permet de prévenir l'utilisateur qu'une anomalie s'est produite dans l'ensemble, cette anomalie n'étant pas forcément un défaut : par exemple un seul moyen de détection peut être dans l'état 0 car ce moyen de détection est défaillant et non pas parce que l'organe qu'il surveille est défaillant.

Avantageusement, la condition de défaut n'est remplie que si deux moyens de détection passent dans l'état 0 en moins de 5 secondes, ce qui évite l'envoi d'un signal de défaut qui n'est pas utile : par exemple, si deux moyens de détection passent à l'état 0 dans la même journée, cela peut être parce que ces deux moyens ont été défectueux dans la même journée et auquel cas, il est inutile d'envoyer un signal de défaut. Par contre, si deux moyens de détection passent dans l'état 0 en moins de 5 secondes, il y a de fortes chances pour que ce soit réellement à cause d'une défaillance d'un organe et auquel cas, il est utile d'envoyer un signal de défaut. Naturellement l'intervalle de temps utilisé peut être plus faible que 5 secondes.

Selon un premier mode de réalisation préféré de l'invention, les moyens de détection sont répartis en deux groupes de sorte que les deux moyens de détection qui surveillent un même organe soient dans deux groupes différents, la méthode comprenant les étapes suivantes:
- lorsque au moins un moyen de détection passe dans l'état 0, l'état 0 est attribué au groupe dans lequel il se trouve;
- la condition de défaut est remplie si et seulement si les deux groupes sont simultanément dans l'état 0.

Cette méthode permet donc d'augmenter la probabilité que lorsqu'un signal de défaut est envoyé, ce soit réellement à cause d'une défaillance d'un organe.

Selon un second mode de réalisation préféré de l'invention, la condition de défaut est remplie si et seulement si deux moyens de détection successifs, n et n+1, sont dans l'état 0 simultanément, toujours afin de limiter les risques d'envoi d'un signal de défaut inutile.

Avantageusement, la méthode comporte en outre une étape d'identification d'un organe défaillant parmi les N organes de l'installation lorsque la condition de défaut est remplie, l'étape d'identification comportant une étape de signalisation du numéro n de l'organe défaillant correspondant aux numéros n et n+1 des moyens de détection successifs qui sont dans l'état 0 simultanément. Ainsi, il est possible d'intervenir de manière ciblée sur l'organe n sur lequel la défaillance a le plus de chance de s'être produite.

Pour un ensemble constituant une installation dont les organes sont distribués dans l'espace, une optimisation du câblage de l'installation est obtenue si l'organe n est localisé matériellement entre les organes n-1 et n+1, pour tout n compris strictement entre 1 et N-1. Ceci revient à dire que le procédé comporte avantageusement une étape de numérotation des organes à surveiller suivant cette règle.

### BREVE DESCRIPTION DES FIGURES

D'autres caractéristiques et avantages de l'invention ressortiront à la lecture de la description qui suit, en référence aux figures annexées, qui illustrent :
- la figure 1, une représentation schématique d'un dispositif de surveillance selon l'invention comportant une pluralité d'interrupteurs;
- la figure 2, une représentation schématique d'un dispositif de surveillance selon un deuxième mode de réalisation de l'invention;
- la figure 3, une représentation schématique d'un dispositif de surveillance selon un troisième mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

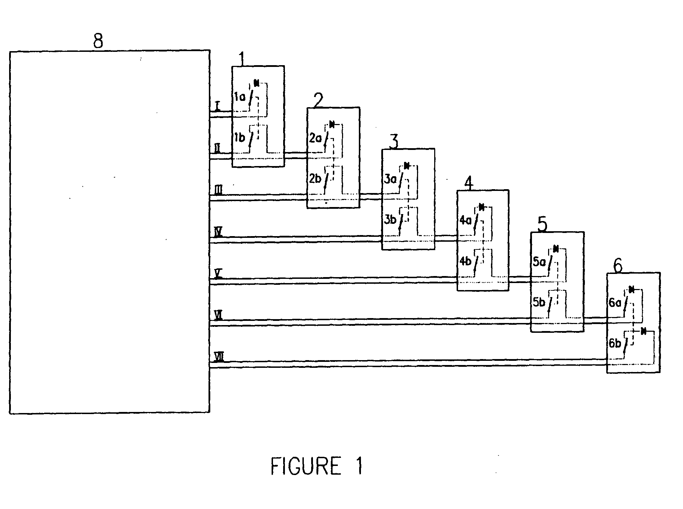

La figure 1 représente schématiquement un dispositif de surveillance selon un mode de réalisation de l'invention dans le cas où N=6 c'est-à-dire dans le cas où il y a 6 organes à surveiller distribués dans l'espace, ici 6 pylônes. Naturellement, l'invention est applicable à un nombre quelconque N>2 d'organe à surveiller, les cas N≤2 n'offrant que peu d'intérêt pratique. Les pylônes sont dans la suite numérotés de façon consécutive, de sorte que le pylône n se trouve physiquement localisé entre le pylône n-1 et le pylône n+1, pour 1<n<N-1.

Les pylônes 1, 2, 3, 4, 5, 6 supportent un câble aérien non représenté sur les figures. Le dispositif de surveillance selon l'invention comporte 12 interrupteurs, 1 a, 1b à 6a, 6b, deux interrupteurs sont disposés au niveau de chaque pylône de telle façon qu'en cas de déraillement du câble, les interrupteurs s'ouvrent.

Le dispositif de surveillance comporte en outre une armoire électrique de sécurité 8, les 12 interrupteurs 1a à 6b étant reliés à l'armoire électrique de sécurité 8 par 7 lignes électriques de la manière suivante :
- le premier interrupteur 1 a du premier pylône 1 est relié à l'armoire électrique de sécurité par une ligne électrique I;
- le deuxième interrupteur 6b du dernier pylône 6 est relié est relié à l'armoire électrique de sécurité par une ligne électrique VII;
- les autres interrupteurs 1 b à 6a sont reliés deux à deux à l'armoire électrique de telle sorte qu'un des interrupteurs d'un pylône n soit relié à l'armoire électrique de sécurité 8 par la même ligne électrique qu'un des interrupteurs du pylône n-1 qui le précède. Par exemple le deuxième interrupteur 1 b du premier pylône est relié à l'armoire électrique de sécurité 8 par la même ligne électrique II que le premier interrupteur 2a du deuxième pylône 2. Le deuxième interrupteur 2b du deuxième pylône 2 est relié à l'armoire électrique de sécurité 8 par la même ligne électrique III que le premier interrupteur 3a du troisième pylône 3 par la ligne III, et ainsi de suite jusqu'au deuxième interrupteur 5b du cinquième pylône 5 qui est relié à l'armoire électrique de sécurité par la même ligne électrique VI que le premier interrupteur 6a du sixième pylône 6.

Les lignes électriques I à VII forment des boucles électriques qui relient un ou deux interrupteurs à l'armoire électrique, chacune de ces boucles électriques étant apte à être interrompue par le (ou les) interrupteurs qu'elle contient en cas de déraillement du câble.

Ce câblage entre les interrupteurs et l'armoire électrique de sécurité 8 permet de réduire le nombre de lignes utilisées tout en ayant à chaque fois deux lignes différentes qui relient les deux interrupteurs d'un même pylône à l'armoire électrique de sécurité 8. Ces deux lignes électriques pour chaque pylône permet une vérification de l'information en cas de déraillement du câble. Le dispositif de surveillance permet donc d'éviter les arrêts intempestifs de l'installation grâce à une redondance de l'information pour chaque pylône, tout en limitant le nombre de lignes électriques utilisées dans le dispositif de surveillance.

Le dispositif selon l'invention peut bien sûr être utilisé pour n'importe quel nombre N de pylônes, et plus le nombre N de pylônes est grand, plus les avantages de l'invention sont importants car plus elle permet de réaliser un gain de lignes électriques.

Les interrupteurs 1a à 1b utilisés sont par exemple des barrettes cassantes telles que celles décrites dans le document FR2548612 ou alors des détecteurs tels que ceux décrits dans le document FR2387830.

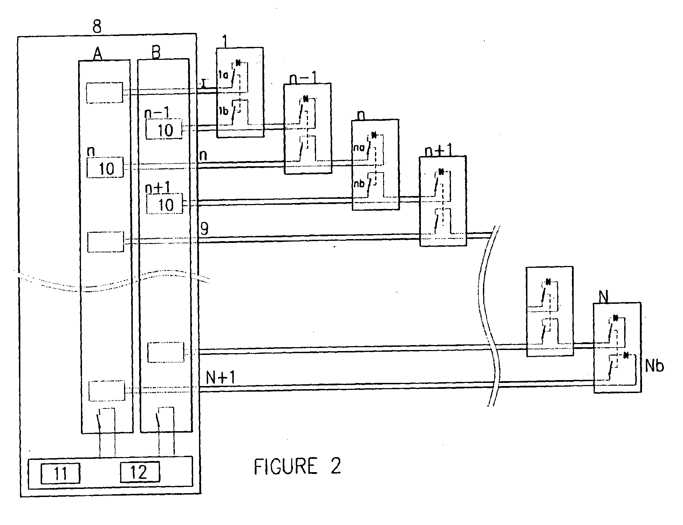

Un dispositif de surveillance selon un second mode de réalisation de l'invention est réalisé en référence à la figure 2. Ce dispositif de surveillance permet de surveiller une installation de transport comportant N pylônes n supportant un câble. Le dispositif de surveillance comporte N paires d'interrupteurs na et nb, chaque paire d'interrupteurs étant disposée au niveau d'un des pylônes n. Le dispositif de surveillance comporte en outre une armoire électrique de sécurité 8 et N+1 lignes de sécurité, 9, qui relient les interrupteurs à l'armoire électrique de sécurité 8 de la manière suivante :
- une première ligne électrique I relie un premier interrupteur 1a du premier pylône 1 à l'armoire électrique 8;
- une N+1-ième ligne électrique relie un interrupteur Nb du N-ième pylône N à l'armoire électrique 8;
- la même ligne électrique n relie en série, pour tout entier n compris entre 2 et N, un des interrupteurs du pylône n-1 et un des interrupteurs du pylône n à l'armoire électrique de sécurité 8.

L'armoire électrique de sécurité 8 comporte N+1 boîtiers de commande 10, chaque boîtier de commande 10 étant relié à une ligne électrique 9. Les boîtiers de commande 10 sont répartis en deux groupes A et B, tels que les deux interrupteurs na et nb d'un même pylône n soient chacun dans un groupe différent : na est dans le groupe A et nb est dans le groupe B.

L'armoire électrique de sécurité 8 est câblée de façon à ce que deux états puissent être attribués à chacun des boîtiers de commande 10 :
- lorsque au moins un des interrupteurs de la ligne n est ouvert, un état 0 est attribué au boîtier de commande n auquel il est relié ;
- lorsque les deux interrupteurs de la ligne n sont fermés, un état 1 est attribué au boîtier de commande n auquel ils sont reliés.

De même deux états peuvent être attribués à chacun des groupes A et B:
- lorsque tous les boîtiers de commande 10 d'un groupe sont dans l'état 1, l'état 1 est attribué au groupe,
- lorsque au moins un boîtier de commande 10 passe à l'état 0, l'état 0 est attribué au groupe auquel il appartient.

L'armoire électrique de sécurité 8 comporte en outre des moyens d'alerte 11 émettant un signal d'alerte, par exemple sonore ou visuel, lorsque au moins un des groupe A ou B est dans l'état 0, ainsi qu'un moyen d'arrêt de l'installation de transport 12 agencé pour arrêter l'installation de transport lorsque les deux groupes A et B sont dans l'état 0 simultanément.

Plus précisément, le dispositif de surveillance selon l'invention fonctionne de la manière suivante :
- si un interrupteur na est ouvert, l'état 0 est attribué au boîtier n auquel il est relié ;
- lorsque le boîtier n est dans l'état 0, l'état 0 est également attribué au groupe A ; les moyens d'alerte avertissent alors l'utilisateur qu'un interrupteur a été ouvert. Tant qu'un seul boîtier est dans l'état 0, les moyens d'arrêt 12 ne sont pas actionnés et par conséquent, l'installation n'est pas arrêtée, ce qui évite les arrêts inutiles de l'installation.
- lorsque les deux groupes A et B se trouvent simultanément dans l'état 0, les moyens d'arrêt 12 sont enclenchés et ils arrêtent l'installation.

Cette condition de simultanéité dans l'état 0 des groupes A et B permet d'augmenter la disponibilité de l'installation, c'est-à-dire d'éviter tant que faire ce peut, les arrêts inutiles de l'installation. En effet, la probabilité pour que deux interrupteurs disposés sur des pylônes différents et appartenant à des groupes différents soient ouverts simultanément est très faible. Dans la plupart des cas, lorsque les deux groupes sont dans l'état 0, c'est parce que les deux interrupteurs d'un même pylône sont ouverts, c'est-à-dire lorsqu'un câble a déraillé.

Le dispositif de surveillance selon l'invention permet donc de diviser quasiment par deux le nombre de lignes électriques utilisées, tout en ayant un système de surveillance de l'installation fiable, en évitant les interruptions inutiles de l'installation et en permettant une localisation relativement précise du défaut le long du câble.

Afin d'améliorer encore la disponibilité de l'installation, le dispositif peut en outre comporter des moyens permettant de refermer automatiquement un interrupteur resté ouvert seul pendant 10 min, sans qu'un autre interrupteur ne se soit ouvert.

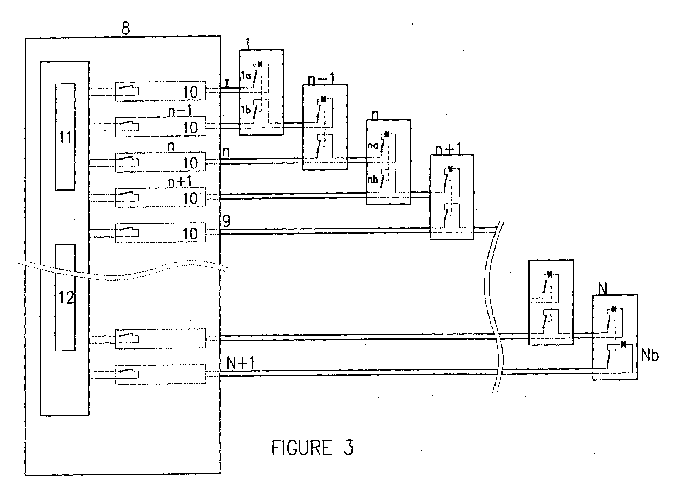

Un autre mode de réalisation de l'invention est décrit en référence à la figure 3. Dans ce mode de réalisation, le dispositif de surveillance comporte également 2N interrupteurs, deux interrupteurs étant disposés au niveau de chaque pylône, ainsi qu'une armoire électrique de sécurité 8 et N+1 lignes électriques. Les interrupteurs sont reliés de la même manière à l'armoire électrique via les N+1 lignes électriques que dans les modes de réalisation précédents. Par ailleurs, l'armoire électrique de sécurité 8 comporte, comme dans le mode de réalisation précédent, N+1 boîtiers de commande 10, le boîtier de commande n étant relié à la ligne n.

Comme dans le mode de réalisation précédent, chaque boîtier de commande 10 peut être placé dans deux états : le boîtier n est dans un état 0 lorsque au moins un des interrupteurs de la ligne n est ouvert, et il est dans un état 1 lorsque tous les interrupteurs de la ligne n sont fermés.

L'armoire électrique de sécurité 8 comporte également des moyens d'alerte 11 émettant un signal d'alerte lorsque au moins un interrupteur est dans l'état 0, ainsi que des moyens d'arrêt de l'installation 12.

Dans ce mode de réalisation, l'armoire électrique de sécurité 8 est câblée de telle sorte que les moyens d'arrêt de l'installation soient actionnés si et seulement si deux boîtiers successifs, n et n+1, sont dans l'état 0 simultanément.

On peut également envisager que les moyens d'arrêt de l'installation ne soient actionnés que si deux boîtiers successifs passent à l'état 0 dans un intervalle de temps suffisamment court pour que ce passage dans l'état 0 soit révélateur d'un déraillement de câble.

Naturellement, l'invention n'est pas limitée aux exemples de réalisation ci-dessus et diverses variantes peuvent être envisagées. Par exemple, dans les modes de réalisation détaillés ci-dessus, l'invention est utilisée pour surveiller un câble aérien soutenu par des pylônes, mais on pourrait très bien envisager que les moyens de détection soient des capteurs, surveillant N organes. En outre, dans les modes de réalisation détaillés, le signal d'alerte est sonore ou visuel mais on pourrait également envisager que le signal d'alerte soit un signal informatique qui soit transmis à une mémoire qui enregistre toutes les anomalies d'un ensemble donné. Par ailleurs, dans le mode de réalisation ci-dessus, le signal de défaut est un signal d'arrêt de l'installation, mais en réalité le signal de défaut pourrait être de toute autre nature : par exemple ce signal de défaut pourrait être un signal d'appel; par exemple d'agents de sécurité, ou un signal d'appel des urgences.

## Revendications

1. Dispositif de surveillance d'une installation de transport comportant un câble soutenu par N pylônes (1, 2, 3, 4, 5, 6), N étant un entier supérieur ou égal à trois, et comportant une armoire électrique de sécurité (8) **caractérisé en ce que** le dispositif de surveillance comporte:
- au moins 2N interrupteurs (1 a à 6b), deux interrupteurs étant disposés au niveau de chaque pylône,
- N+1 lignes électriques (I, II, III, IV, V, VI, VII, 9) reliant les interrupteurs (19-66) à l'armoire électrique de sécurité (8), les interrupteurs (19-66) étant câblés de la manière suivante:
- une première ligne électrique (I) relie un des interrupteurs (1a) du premier pylône (1) à l'armoire électrique de sécurité (8);
- une N+1-ième ligne électrique (VII) relie un des interrupteurs (6b) du N-ième pylône (6) à l'armoire électrique de sécurité (8);
- la même ligne électrique n relie en série, pour tout entier n compris entre 2 et N, un des interrupteurs du pylône n-1 et un des interrupteurs du pylône n à l'armoire électrique de sécurité (8).

2. Dispositif de surveillance selon la revendication 1, **caractérisé en ce que** chaque interrupteur comporte une barrette conductrice électriquement apte à se rompre en cas de déraillement du câble.

3. Dispositif de surveillance selon la revendication 1, **caractérisé en ce que** chaque interrupteur comporte un levier pivotant en cas de déraillement du câble.

4. Dispositif de surveillance selon l'une quelconque des revendications précédentes, **caractérisé en ce que** l'armoire électrique de sécurité (8) comporte N+1 boîtiers de commande (10), le boîtier de commande n étant relié à la ligne électrique n.

5. Dispositif de surveillance selon l'une quelconque des revendications précédentes, **caractérisé en ce que** l'armoire électrique de sécurité (8) est câblée de façon à ce que:
- lorsque au moins un interrupteur de la ligne n est ouvert, un état 0 est attribué au boîtier n;
- lorsque tous les deux interrupteurs de la ligne n sont fermés, un état 1 est attribué au boîtier n.

6. Dispositif de surveillance selon la revendication précédente, **caractérisé en ce que** l'armoire électrique de sécurité (8) comporte en outre des moyens d'alerte susceptibles d'être actionnés lorsque au moins un des boîtiers de commande (10) est dans l'état 0.

7. Dispositif de surveillance selon l'une quelconque des revendications 5 ou 6, **caractérisé en ce que** l'armoire électrique de sécurité (8) comporte en outre des moyens d'arrêt (12) agencés pour arrêter l'installation lorsque au moins deux des boîtiers de commande (10) sont dans l'état 0 simultanément.

8. Dispositif de surveillance selon la revendication 7, **caractérisé en ce que** l'armoire électrique de sécurité (8) est câblée de manière à ce que:
- les boîtiers de commande (10) soient répartis dans deux groupes (A, B) de façon à ce que les deux interrupteurs d'un même pylône n soient reliés à deux boîtiers de commande (10) qui sont chacun dans un groupe différent,
- lorsque au moins un boîtier de commande (10) est dans l'état 0, l'état 0 est attribué au groupe dans lequel il se trouve,
- les moyens d'arrêt (12) sont actionnés si et seulement si les deux groupes sont dans l'état 0 simultanément.

9. Dispositif de surveillance selon la revendication 7, **caractérisé en ce que** les moyens d'arrêt (12) sont activés si et seulement si deux boîtiers de commande (10) consécutifs, n et n+1, sont dans l'état 0 simultanément.

10. Dispositif de surveillance selon l'une quelconque des revendications 7 à 9, **caractérisé en ce que** les moyens d'arrêt de l'installation (12) n'arrêtent l'installation que si deux boîtiers de commande (10) passent à l'état 0 en moins de 2 s.

11. Méthode de surveillance d'une installation de transport comportant N organes et N+1 moyens de détection, N étant un entier supérieur ou égal à trois, les N organes et N+1 moyens de détection étant agencés de façon à ce que:
- le premier moyen de détection surveille le premier organe,
- le N+1-ième moyen de détection surveille le N-ième organe,
- le moyen de détection n, pour n compris entre 2 et N, surveille les 2 organes n-1 et n,
la méthode de surveillance est **caractérisée par** les étapes suivantes:
- chaque moyen de détection est placé dans un état 1 tant que tous les organes qu'il surveille fonctionnent correctement,
- le moyen de détection n pour n compris entre 1 et N+1 passe dans un état 0 lorsque au moins un des organes qu'il surveille est défectueux,
- un signal de défaut est émis lorsqu'une condition de défaut est remplie, la condition de défaut n'étant remplie que si au moins deux des moyens de détection sont dans un état 0 simultanément.

12. Méthode de surveillance selon la revendication précédente, **caractérisée en ce qu'**un signal d'alerte est émis lorsque au moins un des moyens de détection passe dans l'état 0.

13. Méthode de surveillance selon l'une quelconque des revendications 11 ou 12, **caractérisée en ce que** la condition de défaut n'est remplie que si deux moyens de détection passent dans l'état 0 en moins de 5 secondes.

14. Méthode de surveillance selon l'une quelconque des revendications 11 à 13, **caractérisée en ce que** les moyens de détection sont répartis en deux groupes définis de telle sorte que les deux moyens de détection qui surveillent un même organe soient dans deux groupes différents, la méthode comprenant les étapes suivantes:
- lorsque au moins un des moyens de détection passe dans l'état 0, l'état 0 est attribué au groupe dans lequel il se trouve;
- la condition de défaut est remplie si et seulement si les deux groupes sont dans l'état 0 simultanément.

15. Méthode de surveillance selon l'une quelconque des revendications 11 à 13, **caractérisée en ce que** la condition de défaut est remplie si et seulement si deux moyens de détection successifs, n et n+1, sont dans l'état 0 simultanément.

16. Méthode de surveillance selon la revendication 15, **caractérisée en ce qu'**elle comporte en outre une étape d'identification d'un organe défaillant parmi les N organes lorsque la condition de défaut est remplie, l'étape d'identification comportant une étape de signalisation du numéro n de l'organe défaillant correspondant aux numéros n et n+1 des moyens de détection successifs qui sont dans l'état 0 simultanément.

## Patentansprüche

1. Vorrichtung zur Überwachung einer Transportanlage, umfassend ein Kabel, das von N Pylonen (1, 2, 3, 4, 5, 6) getragen wird, wobei N eine ganze Zahl ist, die größer oder gleich drei ist, und einen Sicherheitsschaltschrank (8) umfasst, **dadurch gekennzeichnet, dass** die Überwachungsvorrichtung Folgendes umfasst:
- mindestens 2N Schalter (1a bis 6b), wobei zwei Schaler auf der Ebene jedes Pylons angeordnet sind,
- N+1 elektrische Leitungen (I, II, III, IV, V, VI, VII, 9), die die Schalter (1a - 66) mit dem Sicherheitsschaltschrank (8) verbinden, wobei die Schalter (1a - 6b) auf die folgende Weise verkabelt sind:
- eine erste elektrische Leitung (I), verbindet einen der Schalter (1a) des ersten Pylons (1). mit dem Sicherheitsschaltschrank (8);
- eine N-te elektrische Leitung (VII) verbindet einen der Schalter (6b) des N-ten Pylons (6) mit dem Sicherheitsschaltschrank (8);
- die gleiche elektrische Leitung n verbindet in Serie für jede ganze Zahl n, die zwischen 2 und N liegt, einen der Schalter des Pylons n-1 und einen der Schalter des Pylons n mit dem Sicherheitsschaltschrank (8).

2. Überwachungsvorrichtung nach Anspruch 1, **dadurch gekennzeichnet, dass** jeder Schalter eine leitende Klemme umfasst, die elektrisch dazu in der Lage ist, im Fall einer Entgleisung des Kabels zu brechen.

3. Überwachungsvorrichtung nach Anspruch 1, **dadurch gekennzeichnet, dass** jeder Schalter einen Hebel umfasst, der sich im Fall einer Entgleisung des Kabels dreht.

4. Überwachungsvorrichtung nach einem der vorhergehenden Ansprüche, **dadurch gekennzeichnet, dass** der Sicherheitsschaltschrank (8) N+1 Steuergehäuse (10) umfasst, wobei das Steuergehäuse n mit der elektrischen Leitung n verbunden ist.

5. Überwachungsvorrichtung nach einem der vorhergehenden Ansprüche, **dadurch gekennzeichnet, dass** der Sicherheitsschaltschrank (8) derart verkabelt ist, dass:
- wenn mindestens ein Schalter der Leitung n offen ist, dem Gehäuse n ein Zustand 0 zugewiesen wird.
- wenn beide Schalter der Leitung n geschlossen sind, dem Gehäuse n ein Zustand 1 zugewiesen wird.

6. Überwachungsvorrichtung nach dem vorhergehenden Anspruch, **dadurch gekennzeichnet, dass** der Sicherheitsschaltschrank (8) außerdem Warnmittel umfasst, die betätigt werden können, wenn sich mindestens eines der Steuergehäuse (10) im Zustand 0 befindet.

7. Überwachungsvorrichtung nach einem der Ansprüche 5 oder 6, **dadurch gekennzeichnet, dass** der Sicherheitsschaltschrank (8) außerdem Blockiervorrichtungen (12) umfasst, die angeordnet sind, um die Anlage zu blockieren, wenn sich mindestens zwei der Steuergehäuse (10) im Zustand 0 befinden.

8. Überwachungsvorrichtung nach Anspruch 7, **dadurch gekennzeichnet, dass** der Sicherheitsschaltschrank (8) derart verkabelt ist, dass:
- die Steuergehäuse (10) in zwei Gruppen (A, B) verteilt sind, so dass die zwei Schalter eines gleichen Pylons n mit zwei Steuergehäusen (10) verbunden sind, die sich jeweils in einer verschiedenen Gruppe befinden.
- wenn sich mindestens ein Steuergehäuse (10) im Zustand 0 befindet, der Zustand 0 der Gruppe zugewiesen wird, in der es sich befindet,
- die Blockiermittel (12) betätigt werden wenn, und nur wenn, sich die zwei Gruppen gleichzeitig im Zustand 0 befinden.

9. Überwachungsvorrichtung nach Anspruch 7, **dadurch gekennzeichnet, dass** die Blockiermittel (12) betätigt werden wenn, und nur wenn, sich zwei aufeinander folgende Steuergehäuse (10), n und n+1, gleichzeitig im Zustand 0 befinden.

10. Überwachungsvorrichtung nach einem der Ansprüche 7 bis 9, **dadurch gekennzeichnet, dass** die Blockiermittel der Anlage (12) die Anlage nur dann blockieren, wenn zwei Steuergehäuse (10) in weniger als 2 s in den Zustand 0 übergehen.

11. Vorrichtung zur Überwachung einer Transportanlage, umfassend N Organe und N+1 Nachweismittel, wobei N eine ganze Zahl ist, die größer oder gleich drei ist, wobei die N Organe und N+1 Nachweismittel derart angeordnet sind, dass
- das erste Nacheismittel das erste Organ überwacht,
- das N-1-ste Nachweismittel das N-te Organ überwacht,
- das Nachweismittel n, wobei n zwischen 2 und N liegt, die 2 Organe n-1 und n überwacht,
das Überwachungsverfahren durch die folgenden Schritte gekennzeichnet ist:
- jedes Nachweismittel wird in den Zustand 1 versetzt, solange alle Organe, die es überwacht, korrekt funktionieren,
- das Nachweismittel n, wobei n zwischen 1 und N+1 liegt, geht in einen Zustand 0 über, wenn mindestens eines der Organe, die es überwacht, defekt ist.
- ein Fehlersignal wird ausgegeben, wenn eine Fehlerbedingung erfüllt ist, wobei die Fehlerbedingung nur dann erfüllt ist, wenn sich mindestens zwei der Nachweismittel gleichzeitig in einem Zustand 0 befinden.

12. Verfahren zur Überwachung nach dem vorhergehenden Anspruch, **dadurch gekennzeichnet, dass** ein Warnsignal ausgegeben wird, wenn mindestens eines der Nachweissignale in den Zustand 0 übergeht.

13. Überwachungsvorrichtung nach einem der Ansprüche 11 oder 12, **dadurch gekennzeichnet, dass** die Fehlerbedingung nur dann erfüllt ist, wenn zwei Nachweismittel in weniger als 5 Sekunden in den Zustand 0 übergehen.

14. Überwachungsvorrichtung nach einem der Ansprüche 11 bis 13, **dadurch gekennzeichnet, dass** die Nachweismittel in zwei Gruppen verteilt sind, die derart definiert sind, dass sich die zwei Nachweismittel, die ein gleiches Organ überwachen, in zwei verschiedenen Gruppen befinden, wobei das Verfahren die folgenden Schritte umfasst:
- wenn mindestens eines der Nachweismittel in den Zustand 0 übergeht, wird der Zustand 0 der Gruppe zugewiesen, in der es sich befindet, die Fehlerbedingung ist erfüllt, wenn und nur wenn sich die zwei Gruppen gleichzeitig im Zustand 0 befinden.

15. Überwachungsvorrichtung nach einem der Ansprüche 11 bis 13, **dadurch gekennzeichnet, dass** die Fehlerbedingung erfüllt ist, wenn und nur wenn sich die zwei aufeinander folgenden Nachweismittel, n und n+1, gleichzeitig im Zustand 0 befinden.

16. Verfahren zur Überwachung nach Anspruch 15, **dadurch gekennzeichnet, dass** es außerdem einen Schritt des Identifizierens eines fehlerhaften Organs unter den N Organen umfasst, wenn die Fehlerbedingung erfüllt ist, wobei der Schritt des Identifizierens einen Schritt des Signalisierens der Nummer n des fehlerhaften Organs umfasst, die den Nummern n und n+1 der aufeinander folgenden Nachweismittel entspricht, die sich gleichzeitig im Zustand 0 befinden.

## Claims

1. Surveillance device for a transport apparatus comprising a cable carried by N pylons (1, 2, 3, 4, 5, 6), N being an integer greater than or equal to three, and comprising a safety electric cabinet **characterised in that** the surveillance device comprises:
- at least 2N switches (1a to 6b), with two switches being arranged on each pylon,
- a safety electric cabinet (8),
- N+1 electric lines (I, II, III, IV, V, VI, VII 9) connecting the switches (19-66) to the safety electric cabinet(8), the switches (19-66)being laid in the following way:
- a first electric line (1) connects one of the switches (1a) of the first pylon (1) to the safety electric cabinet (8);
- a N+1st electric line (VII) connects one of the switches (6b) of the Nth pylon (6) to the safety electric cabinet (8);
- the same electric line n connects in series, for any integer n between 2 and N, one of the switches of the pylon n-1 and one of the switches of the pylon n to the safety electric cabinet(8).

2. Surveillance device according to claim 1, **characterised in that** each switch comprises an electrically conductive fork switch able to be broken in the case of a derailment of the cable.

3. Surveillance device according to claim 1, **characterised in that** each switch comprises a lever that pivots in case of a derailment of the cable.

4. Surveillance device as claimed in any preceding claim, **characterised in that** the safety electric cabinet (8) comprises N+1 control boxes (10), with the control box n being connected to the electric line n.

5. Surveillance device as claimed in any preceding claim, **characterised in that** the safety electric cabinet (8)is laid in such a way that:
- when at least one switch of the line n is open, a state 0 is attributed to the box n;
- when both switches of the line n are closed, a state 1 is attributed to the box n.

6. Surveillance device as claimed in the preceding claim, **characterised in that** the safety electric cabinet (8) further comprises means for alerting that can be actuated when at least one of the control boxes (10)is in the state 0.

7. Surveillance device according to any of claims 5 or 6, **characterised in that** the safety electric cabinet (8) further comprises means for stopping (12) arranged to stop the apparatus when at least two of the control boxes (10) are in the state 0 simultaneously.

8. Surveillance device according to claim 7, **characterised in that** the safety electric cabinet (8) is laid in such a way that:
- the control boxes (10) are distributed into two groups (A, B) in such a way that the two switches of the same pylon n are connected to two control boxes (10)which are each in a different group,
- when at least one control box (10)is in the state 0, the state 0 is attributed to the group wherein it is located,
- the means for stopping (12)are actuated if and only if the two groups are in the state 0 simultaneously.

9. Surveillance device according to claim 7, **characterised in that** the means for stopping (12) are actuated if and only if two consecutive control boxes (10), n and n+1, are in the state 0 simultaneously.

10. Surveillance device according to any of claims 7 to 9, **characterised in that** the means for stopping the apparatus (12) stop the apparatus only if two control boxes (10) change to the state 0 in less than 2 s.

11. Surveillance method for a transport apparatus comprising N members and N+1 means for detecting, N being an integer greater than or equal to three, with the N members and N+1 means for detecting being arranged in such a way that:
- the first means of detecting monitors the first member,
- the N+1st means for detecting monitors the Nth member,
- the means for detecting n, for n between 2 and N, monitors the 2 members n-1 and n,
the surveillance method **characterised by** the following steps:
- each means for detecting is placed in a state 1 as long as all of the members that it monitors are operating correctly,
- the means for detecting n for n between 1 and N+1 changes to a state 0 when at least one of the members that it monitors is defective,
- a fault signal is emitted when a fault condition is satisfied, with the fault condition being satisfied only if at least two of the means for detecting are in a state 0 simultaneously.

12. Surveillance method as claimed in the preceding claim, **characterised in that** an alert signal is emitted when at least one of the means for detecting changes to the state 0.

13. Surveillance method according to any of claims 11 or 12, **characterised in that** the fault condition is satisfied only if two means for detecting change to the state 0 in less than 5 seconds.

14. Surveillance method according to any of claims 11 to 13, **characterised in that** the means for detecting are distributed into two groups defined in such a way that the two means for detecting which monitor the same member are in two different groups, the method comprising the following steps:
- when at least one of the means for detecting changes to the state 0, the state 0 is attributed to the group wherein it is located;
- the fault condition is satisfied if and only if the two groups are in the state 0 simultaneously.

15. Surveillance method according to any of claims 11 to 13, **characterised in that** the fault condition is satisfied if and only if two successive means for detecting, n and n+1, are in the state 0 simultaneously.

16. Surveillance method according to claim 15, **characterised in that** it further comprises a step of identifying a defective member among the N members when the fault condition is satisfied, the step of identifying comprising a step of signalling the number n of the defective member corresponding to the numbers n and n+1 of the successive means for detecting which are in the state 0 simultaneously.
